(19)

**Europäisches Patentamt**
**European Patent Office**
**Office européen des brevets**

(11) **EP 4 435 734 B1**

(12) **EUROPEAN PATENT SPECIFICATION**

(45) Date of publication and mention
of the grant of the patent:
**13.05.2026 Bulletin 2026/20**

(21) Application number: **23305383.4**

(22) Date of filing: **21.03.2023**

(51) International Patent Classification (IPC):
**G06V 20/13** $^{(2022.01)}$

(52) Cooperative Patent Classification (CPC):
**G06V 20/13**

(54) **METHOD FOR ASSESSING CARBON CAPTURE OF AN AREA OF INTEREST**

VERFAHREN ZUR BEURTEILUNG DER KOHLENSTOFFBINDUNG EINES BESTIMMTEN BEREICHS

PROCÉDÉ D'ÉVALUATION DE LA CAPTURE DE CARBONE D'UNE ZONE D'INTÉRÊT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietor: **ATOS FRANCE**
**95870 Bezons (FR)**

(72) Inventor: **WALLACE, Andrew**
**KELSALL, CW6 0QY (GB)**

(74) Representative: **Novagraaf Technologies**
**2 rue Sarah Bernhardt**
**CS90017**
**92665 Asnières-sur-Seine Cedex (FR)**

(56) References cited:
**US-A1- 2005 273 358**

• **CORY C CLEVELAND ET AL: "A comparison of plot-based satellite and Earth system model estimates of tropical forest net primary production", GLOBAL BIOGEOCHEMICAL CYCLES, AMERICAN GEOPHYSICAL UNION, WASHINGTON, DC, US, vol. 29, no. 5, 25 May 2015 (2015-05-25), pages 626 - 644, XP071727723, ISSN: 0886-6236, DOI: 10.1002/2014GB005022**
• **HALL FORREST G ET AL: "Multi-angle narrow-band remote sensing of gross primary production", 2016 IEEE INTERNATIONAL GEOSCIENCE AND REMOTE SENSING SYMPOSIUM (IGARSS), IEEE, 10 July 2016 (2016-07-10), pages 1717 - 1718, XP032990658, DOI: 10.1109/IGARSS.2016.7729439**

# Description

## Field of the invention

The present invention relates to a method for assessing carbon capture in an area of interest.

The invention further relates to a computer program, and to a device configured to perform said method.

The invention applies to the field of remote monitoring, and more specifically to the remote assessment of carbon capture of an area of interest.

## Background

According to the 2021 Intergovernmental Panel on Climate Change (IPCC) report, it is required to limit global warming to 1.5°C above pre-industrial levels in order to prevent the most dangerous and irreversible aspects of climate change.

In this context, atmospheric carbon dioxide, which is known to be a major contributor to greenhouse effect, has seen its levels reach 421 ppm (parts per million) in 2022, an increase, according to the National Oceanic and Atmospheric Administration (NOAA), of 50% over pre-industrial levels.

Oceans cover 71% of the world's surface area, and research shows that marine primary producers have enormous potential as a source of carbon capture.

Today, to measure the carbon capture potential of a given area of coastal or marine environment, it is required to perform on-site observations and measurements to obtain relevant data, and to determine the carbon capture of said area based on the obtained data.

However, this method is not entirely satisfactory.

Indeed, the obtained data are limited to the areas that can actually be reached by a human expert.

Furthermore, such method is heavily based on human expertise, so that it lacks reliability, consistency and repeatability.

A purpose of the present invention is to overcome at least one of these drawbacks.

Another purpose of the invention is to provide a reliable, consistent and repeatable way to remotely measure the carbon capture potential of an area, especially an area of coastal or marine environment.

Another purpose of the invention is to provide a method that does not rely as much on human expertise to perform such measurement.

Cory C Cleveland et al: "A comparison of plot-based satellite and Earth system model estimates of tropical forest net primary production", Global Biochemical Cycles, American Geophysical Union, vol. 29, issue 5, pages 626-644, describes radiation-based net primary production estimates.

Forrest G Hall et al: "Multi-angle narrow-band remote sensing of gross primary production", 2016 IEEE International Geoscience and Remote Sensing Symposium, IEEE, pages 1717-1718, describes multi-angle narrow-band remote sensing of gross primary production.

US 2005/273358 A1 describes generating standardized environmental benefit credits.

## Summary of the invention

To this end, the present invention is a method of the aforementioned type, comprising:

- implementing at least one image analysis algorithm on at least one top-down image of at least part of the area of interest, to determine environmental data representative of at least one primary producer and/or at least one biotope of the area of interest;
- based on the determined environmental data, computing a carbon capture indicator representative of an estimated carbon capture potential of the area of interest.

Indeed, by determining the carbon capture potential of the area of interest based on top-down images of said area of interest, remote monitoring is achieved. In other words, the need to perform on-site measurement, especially in hard-to-reach and/or remote areas such as areas of coastal or marine environment, is overcome.

Moreover, the outputs provided by the image analysis algorithm are repeatable and quantifiable. Consequently, the invention provides a reliable, consistent and repeatable way to remotely measure the carbon capture potential of an area of interest.

According to other advantageous aspects of the invention, the method includes one or several of the following features, taken alone or in any technically possible combination:

the computed carbon capture indicator is a net primary productivity of the area of interest;

the method further comprises calculating the carbon capture potential of the area of interest based on the net primary productivity and a size of the area of interest;

the determined environmental data include at least one primary producer of the area of interest, and wherein computing the carbon capture indicator includes associating each primary producer to a corresponding expected net primary productivity;

the carbon capture indicator is further computed based on habitat data associated with the area of interest and representative of climatic features, pedological features and/or sediment characteristics, geological features, hydrographic features and/or topographic features of the area of interest;

the step of implementing at least one image analysis algorithm includes computing, based on each top-down image, a normalized difference vegetation index and a normalized difference water index, the environmental data being determined based on the computed normalized difference vegetation index and normalized difference water index;

the environmental data is further determined based on a series of top-down images of the area of interest acquired at different acquisition dates;

the method further includes retrieving on-site measurement data representative of at least one physical and/or chemical property of the area of interest, the carbon capture indicator being further computed based on the retrieved on-site measurement data;

the step of implementing at least one image analysis algorithm includes detecting the presence of at least one predetermined human-made structure in the area of interest, the carbon capture indicator being further computed based on each detected human-made structure;

the method further includes predicting an evolution of the carbon capture indicator over time based on the determined environmental data;

the evolution of the carbon capture indicator over time is further predicted based on each detected human-made structure;

at least one of the determined environmental data and the computed carbon capture indicator is associated with a date of acquisition of each corresponding top-down image, the method further including monitoring an evolution of the environmental data and/or the carbon capture indicator over time, and outputting an alert signal if a corresponding variation over time is outside a predetermined range;

the method further comprises:

- implementing at least one image analysis algorithm on at least one top-down image of at least one neighbouring area adjacent to the area of interest, to determine environmental data representative of at least one primary producer and/or at least one biotope of each neighbouring area;
- for each neighbouring area, computing a carbon capture indicator representative of an estimated carbon capture potential of said neighbouring area, based on the determined environmental data of said neighbouring area and on the computed carbon capture indicator of the area of interest.

According to another aspect of the same invention, it is proposed a computer program comprising instructions, which when executed by a computer, cause the computer to carry out the steps of the method as defined above.

The computer program may be in any programming language such as C, C++, JAVA, Python, R, a GIS (Geographical Information System) programming language, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a computer, a smartphone, a tablet, a server, etc.

The invention also relates to a remote monitoring system for assessing carbon capture in an area of interest, the remote monitoring system including a processing unit configured to:

- implement at least one image analysis algorithm on at least one top-down image of at least part of the area of interest, to determine environmental data representative of at least one primary producer and/or at least one biotope of the area of interest;
- based on the determined environmental data, compute a carbon capture indicator representative of an estimated carbon capture potential of the area of interest.

The system may be a personal device such as a computer, a smartphone, a tablet, a smartwatch, any wearable electronic device, etc.

The system according to the invention may execute one or several applications to carry out the method according to the invention.

The system according to the invention may be loaded with, and configured to execute, the computer program according to the invention.

## Brief description of the drawings

Other advantages and characteristics will become apparent on examination of the detailed description of an embodiment which is in no way limitative, and the attached figures, where:

Figure 1 is a schematic representation of a remote monitoring system according to the invention; and

Figure 2 is a flowchart of a method for assessing carbon capture performed by the remote monitoring system of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

## Detailed description

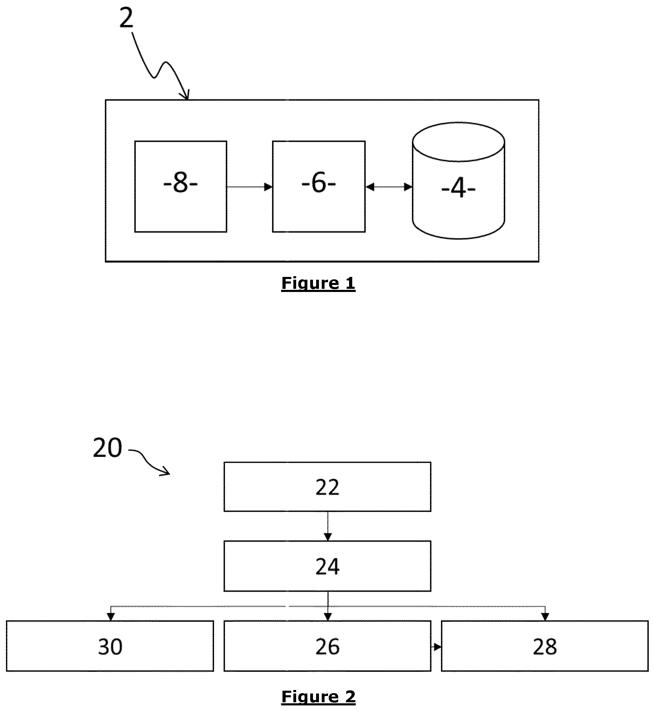

A remote monitoring system 2 according to the invention is show on figure 1.

The remote monitoring system 2 is configured to remotely assess carbon capture in one or several area(s) of interest, based on remote measurements, especially top-down images of said area(s) of interest.

The remote monitoring system 2 includes a knowledge database 4 and a processing unit 6 connected to said knowledge database 4.

The remote monitoring system 2 further includes a user interface 8 connected to the processing unit 6, to allow a user to input instructions relating to each area of interest for which an assessment of the carbon capture is needed.

## Knowledge database 4

The knowledge database 4 is configured to store data linking primary producers and/or biotopes to carbon capture.

By "primary producers", it is meant, in the context of the present invention, organisms that produce complex organic compounds using carbon in a simple form (e.g., carbon dioxide), for instance using photosynthesis. Such organisms generally form the first link in the local food chain.

By "biotope", it is meant, in the context of the present invention, a combination of a habitat and of key organisms (such as primary producers) that are endemic to said habitat.

By "habitat", it is meant, in the context of the present invention, an environment where organisms might live.

*Primary producer data*

For example, the knowledge database 4 is configured to store, for each biotope, primary producer data representative of the expected primary producers of said biotope, *i.e.,* the primary producers that are most likely to be found in said biotope.

As an example, in the case of areas of marine and/or coastal environment, the primary producers that are most likely to be found include mangrove, saltmarsh, seagrass and/or macroalgae.

*Primary productivity data*

The knowledge database 4 may also be configured to store, for each primary producer, primary productivity data representative of the expected net primary productivity for said primary producer.

By "net primary productivity", it is meant, in the context of the present invention, the amount of carbon retained in an area, which generally corresponds to an increase in biomass over time. The net primary productivity is equal to the difference between the amount of carbon produced through photosynthesis and the amount of carbon that is lost to respiration.

Such primary productivity data may be automatically extracted from relevant scientific literature on a regular basis.

*Carbon capture data*

The knowledge database 4 may also be configured to store, for each primary producer, carbon capture data for converting the associated net primary productivity to a corresponding carbon capture.

By "carbon capture", it is meant, in the context of the invention, the mass of carbon sequestrated in the habitat, per surface unit and time unit. Carbon capture is generally expressed in grams of carbon per square metre per year.

Such carbon capture data may be automatically extracted from relevant scientific literature on a regular basis.

*On-site measurement data*

The knowledge database 4 may be further configured to store on-site measurement data representative of at least one physical and/or chemical property of the area of interest.

The on-site measurement data may include environmental DNA (eDNA), or other data collected using probes such as camera traps, monitoring buoys and the like.

Preferably, the one-site measurement data are georeferenced, so that they are unambiguously associated with a respective location.

*Habitat data*

Furthermore, the knowledge database 4 may further be configured to store habitat data associated with observed areas.

Preferably, for each observed area, the habitat data include topological data representative of topological features of the observed area.

For instance, the topological data comprise point cloud data including a plurality of points, each associated with corresponding X,Y & Z coordinates in a predetermined coordinate system that are representative of a respective position in the observed area.

Alternatively, or in addition, for a given observed area, the habitat data are representative of climatic features, pedological features and/or sediment characteristics, geological features, hydrographic features and/or topographic features of the said observed area.

The habitat data may be determined based on high-definition photogrammetry and/or derived from lidar (for "Light Detection And Ranging") acquisitions, performed using a drone or a piloted aircraft, for example.

Preferably, for lidar acquisitions, a laser having a central wavelength of 532 nm is used, in order to maximise water penetration in marine and/or coastal environment, thereby allowing 3D bathymetric image creation to approximately 10 m depth.

*Top-down images*

The knowledge database 4 is also configured to store top-down images of each area of interest.

For instance, such top-down images have been previously acquired from an aircraft flying over the area of interest.

Alternatively, or in addition, the top-down images may be satellite images, such as satellite images extracted from Landsat, Sentinel, Copernicus and/or PLANET satellite data.

For instance, said satellite images are multi-band satellite images such as images in band 3 (green, *e.g.*, between 0.53 $\mu$m and 0.59 $\mu$m), band 4 (red, *e.g.*, between 0.64 $\mu$m and 0.67 $\mu$m), band 5 (near infrared, or NIR, *e.g.*, between 0.85 $\mu$m and 0.88 $\mu$m) and/or band 6 (short wave infrared, or SWIR, *e.g.*, between 1.57 $\mu$m and 1.65 $\mu$m and/or between 2.11 $\mu$m and 2.29 $\mu$m).

Processing unit 6

The processing unit 6 is a hardware-based unit, such as a processor, an electronic chip, a calculator, a smartphone, a computer, a server and the like. Alternatively, or in addition, the processing unit 6 is a software-based unit, such as an application, a computer program, a virtual machine and the like.

The processing unit 6 is configured to receive, from the user interface 8, the instructions originating from the user and relating to the area of interest for which an assessment of the carbon capture is required.

For instance, to input the aforementioned instructions, the user selects a geographic zone on a displayed map, said selected geographic zone forming the area of interest.

The processing unit 6 is further configured to retrieve, from the knowledge database 4, at least one top-down image of at least part of the area of interest.

Moreover, the processing unit 6 is configured to perform an assessment method 20 (figure 2) to process each retrieved top-down image in order to output a carbon capture indicator representative of an estimated carbon capture potential of the area of interest.

The assessment method 20 comprises an image analysis step 22 and a carbon capture estimation step 24.

Optionally, the assessment method 20 further comprises a forecasting step 26, a monitoring step 28 and/or an influence determination step 30.

*Image analysis step 22*

The processing unit 6 is configured to implement, during the image analysis step 22, at least one image analysis algorithm on each retrieved top-down image, in order to determine environmental data associated with the area of interest. The determined environmental data are representative of at least one biotope and/or at least one primary producer of the area of interest.

For instance, the determined environmental data include at least one biotope of the area of interest and/or at least one primary producer of the area of interest.

Advantageously, for each biotope, respectively for each primary producer, the processing unit 6 is configured to determine the surface, within the area of interest, that is occupied by said biotope, respectively for said primary producer.

For instance, the processing unit 6 is configured to perform image recognition on the retrieved top-down image to determine the environmental data associated with the area of interest. In this case, the processing unit 6 is configured to associate predetermined shapes (and/or predetermined combinations of shapes and colours) in the retrieved top-down image with at least one primary producer and/or with at least one biotope.

Alternatively, or in addition, the processing unit 6 is configured to extract colour features from one or more colour channel(s) of the top-down image and to determine the environmental data based on the extracted colour features.

For instance, such colour features include, for each top-down image, a normalized difference vegetation index (NDVI) and/or a normalized difference water index (NDWI).

A general formula for the computation of the normalized difference vegetation index is:

$$NDVI = \frac{NIR\text{-}R}{NIR\text{+}R}$$

where R and NIR are, respectively, the reflectance of the area of interest in the red (visible) and near-infrared bands. Said reflectance is extracted from the top-down image.

A general formula for the computation of the normalized difference water index is:

$$NDWI = \frac{G\text{-}NIR}{G\text{+}NIR}$$

where G is the reflectance of the area of interest in the green band.

In this case, the processing unit 6 is configured to associate each NDVI value and/or NDWI value with corresponding environmental data of the area of interest.

Advantageously, the processing unit 6 is configured to further determine, during the image analysis step 22, the environmental data based on the acquisition date of the top-down image. This is advantageous since the appearance of the primary producers (span, colour, etc.) and/or the biotope (reflectance, density, etc.) may vary over time, especially from season to season.

Advantageously, the processing unit 6 may also be configured to determine, during the image analysis step 22, the environmental data based on top-down images of the area of interest that have been acquired at different acquisition dates. This is advantageous, since the changes over time of a given image feature (such as NVDI and/or NWDI) may form a signature of a biotope or a primary producer.

Advantageously, the processing unit 6 may also be configured to determine, during the image analysis step 22, the environmental data based on the location of the area of interest. This feature is advantageous, as it allows to refine the determination of the environmental data, based on the location, by excluding primary producer or biotopes that are known to be absent from certain regions.

Alternatively, or in addition, the processing unit 6 is configured to implement an artificial intelligence model to analyse the top-down image in order to determine the corresponding environmental data. Such artificial intelligence model may have been previously trained to achieve such determination.

As an example, the artificial intelligence model has been previously trained based on NVDI and/or NWDI values in known areas where primary producers have been clearly identified, so as to learn which NVDI and/or NWDI values are associated with each primary producer.

Advantageously, the processing unit 6 is also configured to implement, during the image analysis step 22, at least one image analysis algorithm adapted to detect the presence of at least one predetermined human-made structure in the area of interest. Such human-made structures may include, in the case of marine and/or coastal environment, mooring buoys, fences, piers and the like.

Such feature is advantageous, as the presence of such human-made structures is likely to have a detrimental impact on the carbon capture potential of a given biotope.

*Carbon capture estimation step 24*

The processing unit 6 is also configured to compute, during the carbon capture estimation step 24, the carbon capture indicator that is representative of the estimated carbon capture potential of the area of interest, based on the determined environmental data.

Preferably, in the case where the determined environmental data include at least one biotope of the area of interest, the processing unit 6 is configured to determine the corresponding primary producers based on the primary producer data stored in the knowledge database 4.

Furthermore, the processing unit 6 is configured to associate each determined primary producer with a corresponding expected net primary productivity, based on the primary productivity data stored in the knowledge database 4. In this case, the computed carbon capture indicator is a net primary productivity of the area of interest.

Advantageously, in the case where the processing unit 6 has detected human-made structure in the area of interest, the processing unit 6 is also configured to compute the carbon capture indicator based on each detected human-made structure. This is advantageous because the presence of human-made structures can dramatically reduce the amount of primary producers in their vicinity, and therefore hinder the net primary productivity of the area of interest.

Preferably, the processing unit 6 is configured to further calculate the carbon capture potential of the area of interest based on the computed carbon capture indicator and on the carbon capture data.

For example, the processing unit 6 is configured to calculate the carbon capture potential of the area of interest based on a result of multiplying the computed net primary productivity with the total surface of the area of interest.

The processing unit 6 may be further configured to apply a coefficient to the result of the aforementioned multiplication in order to obtain the carbon capture potential.

Said coefficient advantageously depends on the on-site measurement data and/or the habitat data stored in the knowledge database 4.

This feature is advantageous, given that habitat topological and hydrological conditions, among other habitat data, may influence sedimentation rates and sediment transport, thereby affecting the carbon capture potential. On-site measurement data may allow to increase the accuracy of the applied coefficient.

Said coefficient may also depend on the actual surface occupied by each biotope and/or each primary producer in the area of interest.

*Forecasting step 26*

Preferably, the processing unit 6 is configured to estimate, during the forecasting step 26, an evolution of the carbon capture indicator and/or the carbon capture potential of the area of interest over time, based on the determined environmental data.

For instance, the processing unit 6 is configured to monitor an evolution over time of the carbon capture indicator and/or the carbon capture potential, and to extrapolate a corresponding future value based on said evolution.

In this case, the processing unit 6 is advantageously configured to further estimate the evolution of the carbon capture indicator over time based on each detected human-made structure.

*Monitoring step 28*

Preferably, the computed carbon capture indicator is associated with a date of acquisition of each corresponding top-down image.

In this case, the processing unit 6 is configured to monitor, during the monitoring step 28, an evolution of the carbon capture indicator over time, and to output an alert signal if a corresponding variation over time is outside a predetermined range.

Alternatively, or in addition, the processing unit 6 is configured to associate the determined environmental data with a date of acquisition of each corresponding top-down image. In this case, the processing unit 6 is further configured to monitor an evolution of the environmental data over time, and to output an alert signal if a corresponding variation over time is outside a predetermined range.

Moreover, in the case where the forecasting step 26 is performed, the processing unit 6 may be configured to output the alert signal if the variation over time of the environmental data and/or carbon capture indicator deviates from the corresponding forecast value(s).

*Influence determination step 30*

Preferably, the processing unit 6 is also configured to perform the aforementioned image analysis step 22 for at least one neighbouring area adjacent to the area of interest.

In this case, the processing unit 6 is advantageously configured to compute, during the influence determination step 30, a carbon capture indicator representative of an estimated carbon capture potential of said neighbouring area, based on the determined environmental data of said neighbouring area, and also on the computed carbon capture indicator of the area of interest.

This feature is advantageous, as it allows to take into account the fact that areas of healthy growth of primary producers can be expected to expand into surrounding areas of similar habitat as a result of vegetative reproduction or seed dispersal.

Calculating the carbon capture potential of the area of interest based on each primary producer is advantageous, as it increases the reliability of the obtained result.

Computing the carbon capture indicator based on the habitat data is also advantageous, as it further increases the accuracy of the result.

Computing the carbon capture indicator based on the retrieved on-site measurement data also provides the advantage of an increased accuracy of the result.

Using the NDVI and/or the NDWI to determine the environmental data is advantageous, as NDVI and/or NDWI values may be associated with specific primary producers and/or biotopes, especially when the evolution of the NDVI and/or the NDWI values is taken into account.

Determining the environmental data based on a series of top-down images of the area of interest acquired at different acquisition dates is advantageous, since the changes over time of a given image feature (such as NVDI and/or NWDI) may form a signature of a biotope or a primary producer.

Computing the carbon capture indicator based on each detected human-made structure is advantageous, as the presence of such human-made structures is likely to have a detrimental impact on the carbon capture potential of a given biotope.

Predicting the evolution of the carbon capture indicator over time is advantageous, as it allows to establish boundaries defining situations that may be considered as normal.

Monitoring an evolution, over time, of the environmental data and/or the carbon capture indicator is advantageous, as it allows for an automated detection of situations that are deemed abnormal.

Computing the carbon capture indicator of a neighbouring area of a given area of interest based on the carbon capture indicator of said area of interest is advantageous, as it allows to take into account the impact of areas of healthy growth of primary producers, which may expand into surrounding areas of similar habitat as a result of vegetative reproduction or seed dispersal, thereby potentially increasing the carbon capture potential of said neighbouring area.

**Operation**

Operation of the remote monitoring system 2 will now be described.

During a preliminary step, the top-down images are stored in the knowledge database 4.

The primary producer data, the primary productivity data, carbon capture data, the on-site measurement data, the habitat data may also be stored in the knowledge database 4.

Then, the user inputs instructions, through the user interface 8, indicative of the area of interest for which an assessment of the carbon capture is required.

Then, the processing unit 6 retrieves, from the knowledge database 4, at least one top-down image of at least part of the area of interest.

Then, during the image analysis step 22, the processing unit 6 implements at least one image analysis algorithm on each retrieved top-down image to determine the environmental data representative of at least one biotope and/or at least one primary producer of the area of interest.

Then, during the carbon capture estimation step 24, the processing unit 6 computes the carbon capture indicator representative of the estimated carbon capture potential of the area of interest, based on the determined environmental data.

Preferably, the processing unit 6 further calculates the carbon capture potential of the area of interest based on the computed carbon capture indicator.

During the optional forecasting step 26, the processing unit 6 estimates an evolution of the carbon capture indicator and/or the carbon capture potential of the area of interest over time, based on the determined environmental data.

Moreover, during the optional monitoring step 28, the processing unit 6 monitors an evolution of the determined environmental data and/or the carbon capture indicator, and outputs an alert signal if an associated variation over time is outside a predetermined range, or deviates from the corresponding forecast value(s).

Optionally, the processing unit 6 performs the aforementioned image analysis step 22 for at least one neighbouring area adjacent to the area of interest, and computes, during the influence determination step 30, a carbon capture indicator representative of an estimated carbon capture potential of the neighbouring area, based on the determined environmental data of said neighbouring area, and also on the computed carbon capture indicator of the area of interest.

Of course, the invention is not limited to the examples detailed above.

**Claims**

1. A computer-implemented method (20) for assessing carbon capture in an area of interest, the method comprising:

   - implementing (22) at least one image analysis algorithm on at least one top-down image of at least part of the area of interest, to determine environmental data representative of at least one primary producer and/or at least one biotope of the area of interest, said at least one image analysis algorithm comprising extracting, based on each top-down image, colour features comprising a normalized difference vegetation index and a normalized difference water index, and performing at least one of:

   ○ image recognition to associate predetermined shapes and/or predetermined combinations of shapes and the extracted colour features in the retrieved top-down image with at least one primary producer and/or with at least one biotope; and
   ○ applying an artificial intelligence model to analyse the top-down image, said artificial intelligence model having been previously trained based on said colour features in known areas where at least one primary producer has been clearly identified, to learn which colour features values are associated with said primary producer;

   - based on the determined environmental data, computing (24) a carbon capture indicator representative of an estimated carbon capture potential of the area of interest.

2. The method (20) according to claim 1, wherein the computed carbon capture indicator is a net primary productivity of the area of interest.

3. The method (20) according to claim 2, further comprising calculating the carbon capture potential of the area of interest based on the net primary productivity and a size of the area of interest.

4. The method (20) according to any one of claims 1 to 3, wherein the determined environmental data include at least one primary producer of the area of interest, and wherein computing the carbon capture indicator includes associating each primary producer to a corresponding expected net primary productivity.

5. The method (20) according to any one of claims 1 to 4, wherein the carbon capture indicator is further computed based on habitat data associated with the area of interest and representative of climatic features, pedological features and/or sediment characteristics, geological features, hydrographic features and/or topographic features of the area of interest.

6. The method (20) according to any one of claims 1 to 5, wherein the environmental data is further determined based on a series of top-down images of the area of interest acquired at different acquisition dates.

7. The method (20) according to any one of claims 1 to 6, further including retrieving on-site measurement data representative of at least one physical and/or chemical property of the area of interest, the carbon capture indicator being further computed based on the retrieved on-site measurement data.

8. The method (20) according to any one of claims 1 to 7, wherein the step (22) of implementing at least one image analysis algorithm includes detecting the presence of at least one predetermined human-made structure in the area of interest, the carbon capture indicator being further computed based on each detected human-made structure.

9. The method (20) according to any one of claims 1 to 8, further including predicting (26) an evolution of the carbon capture indicator over time based on the determined environmental data.

10. The method (20) according to claim 9 when depending on claim 8, wherein the evolution of the carbon capture indicator over time is further predicted based on each detected human-made structure.

11. The method (20) according to any one of claims 1 to 10, wherein at least one of the determined environmental data and the computed carbon capture indicator is associated with a date of acquisition of each corresponding top-down image, the method further including monitoring (28) an evolution of the environmental data and/or the carbon capture indicator over time, and outputting an alert signal if a corresponding variation over time is outside a predetermined range.

12. The method (20) according to any one of claims 1 to 11, further comprising:

- implementing at least one image analysis algorithm on at least one top-down image of at least one neighbouring area adjacent to the area of interest, to determine environmental data representative of at least one primary producer and/or at least one biotope of each neighbouring area;
- for each neighbouring area, computing (30) a carbon capture indicator representative of an estimated carbon capture potential of said neighbouring area, based on the determined environmental data of said neighbouring area and on the computed carbon capture indicator of the area of interest.

13. A computer program comprising instructions, which when executed by a computer, cause the computer to carry out the steps of the method of any one of claims 1 to 12.

14. A remote monitoring system (2) for assessing carbon capture in an area of interest, the remote monitoring system (2) including a processing unit (6) configured to:

- implement at least one image analysis algorithm on at least one top-down image of at least part of the area of interest, to determine environmental data representative of at least one primary producer and/or at least one biotope of the area of interest, said at least one image analysis algorithm comprising extracting, based on each top-down image, colour features comprising a normalized difference vegetation index and a normalized difference water index, and performing at least one of:

  ∘ image recognition to associate predetermined shapes and/or predetermined combinations of shapes and the extracted colour features in the retrieved top-down image with at least one primary producer and/or with at least one biotope; and
  ∘ applying an artificial intelligence model to analyse the top-down image, said artificial intelligence model having been previously trained based on said colour features in known areas where at least one primary producer has been clearly identified, to learn which colour features values are associated with said primary producer;

- based on the determined environmental data, compute a carbon capture indicator representative of an estimated carbon capture potential of the area of interest.

**Patentansprüche**

1. Computerimplementiertes Verfahren (20) zum Bewerten der Kohlenstoffabscheidung in einem Bereich von Interesse, das Verfahren umfassend:

- Implementieren (22) mindestens eines Bildanalysealgorithmus auf mindestens einem Top-Down-Bild mindestens eines Teils des Bereichs von Interesse, um Umweltdaten zu bestimmen, die für mindestens einen Primärproduzenten und/oder mindestens ein Biotop des Bereichs von Interesse repräsentativ sind, wobei der mindestens eine Bildanalysealgorithmus basierend auf jedem Top-Down-Bild das Extrahieren von Farbmerkmalen, die einen normalisierten Differenzvegetationsindex und einen normalisierten Differenzwasserindex umfassen, und das Durchführen mindestens eines von Folgendem:

  ∘ Bilderkennung, um vorbestimmte Formen und/oder vorbestimmte Kombinationen von Formen und die extrahierten Farbmerkmale in dem abgerufenen Top-Down-Bild mindestens einem Primärproduzenten und/oder mindestens einem Biotop zuzuordnen; und

o Anwenden eines Modells der künstlichen Intelligenz, um das Top-Down-Bild zu analysieren, wobei das Modell der künstlichen Intelligenz zuvor basierend auf den Farbmerkmalen in bekannten Bereichen, in denen mindestens ein Primärproduzent eindeutig identifiziert wurde, trainiert wurde, um zu lernen, welche Werte der Farbmerkmale mit dem Primärproduzenten verbunden sind;

- basierend auf den bestimmten Umweltdaten, Berechnen (24) eines Kohlenstoffabscheidungsindikators, der für ein geschätztes Kohlenstoffabscheidungspotenzial des Bereichs von Interesse repräsentativ ist.

2. Verfahren (20) nach Anspruch 1, wobei der berechnete Kohlenstofferfassungsindikator eine Nettoprimärproduktivität des Bereichs von Interesse ist.

3. Verfahren (20) nach Anspruch 2, ferner umfassend das Berechnen des Kohlenstofferfassungspotenzials des Bereichs von Interesse basierend auf der Nettoprimärproduktivität und einer Größe des Bereichs von Interesse.

4. Verfahren (20) nach einem der Ansprüche 1 bis 3, wobei die bestimmten Umweltdaten mindestens einen Primärproduzenten des Bereichs von Interesse einschließen, und wobei das Berechnen des Kohlenstoffabscheidungsindikators das Zuordnen jedes Primärproduzenten zu einer entsprechenden erwarteten Nettoprimärproduktivität einschließt.

5. Verfahren (20) nach einem der Ansprüche 1 bis 4, wobei der Kohlenstofferfassungsindikator ferner basierend auf Habitatdaten berechnet wird, die mit dem Bereich von Interesse assoziiert und repräsentativ für klimatische Merkmale, bodenkundliche Merkmale und/oder Sedimenteigenschaften, geologische Merkmale, hydrographische Merkmale und/oder topographische Merkmale des Bereichs von Interesse sind.

6. Verfahren (20) nach einem der Ansprüche 1 bis 5, wobei die Umgebungsdaten ferner basierend auf einer Reihe von Top-Down-Bildern des Bereichs von Interesse bestimmt werden, die zu unterschiedlichen Erfassungszeitpunkten aufgenommen wurden.

7. Verfahren (20) nach einem der Ansprüche 1 bis 6, ferner einschließend das Abrufen von Vor-Ort-Messdaten, die für mindestens eine physikalische und/oder chemische Eigenschaft des Bereichs von Interesse repräsentativ sind, wobei der Kohlenstoffabscheidungsindikator ferner basierend auf den abgerufenen Vor-Ort-Messdaten berechnet wird.

8. Verfahren (20) nach einem der Ansprüche 1 bis 7, wobei der Schritt (22) des Implementierens mindestens eines Bildanalysealgorithmus das Erfassen des Vorhandenseins mindestens einer vorbestimmten vom Menschen geschaffenen Struktur in dem Bereich von Interesse einschließt, wobei der Kohlenstoffabscheidungsindikator ferner basierend auf jeder erfassten vom Menschen geschaffenen Struktur berechnet wird.

9. Verfahren (20) nach einem der Ansprüche 1 bis 8, ferner einschließend das Vorhersagen (26) einer zeitlichen Entwicklung des Indikators für die Kohlenstoffabscheidung basierend auf den bestimmten Umweltdaten.

10. Verfahren (20) nach Anspruch 9, wenn es von Anspruch 8 abhängt, wobei die Entwicklung des Kohlenstofferfassungsindikators im Laufe der Zeit ferner basierend auf jeder erfassten vom Menschen geschaffenen Struktur vorhergesagt wird.

11. Verfahren (20) nach einem der Ansprüche 1 bis 10, wobei mindestens einer der bestimmten Umweltdaten und des berechneten Kohlenstoffabscheidungsindikators mit einem Datum der Erfassung jedes entsprechenden Top-Down-Bildes verknüpft ist, wobei das Verfahren ferner das Überwachen (28) einer Entwicklung der Umweltdaten und/oder des Kohlenstoffabscheidungsindikators im Laufe der Zeit und das Ausgeben eines Alarmsignals einschließt, wenn eine entsprechende Veränderung im Laufe der Zeit außerhalb eines vorbestimmten Bereichs liegt.

12. Verfahren (20) nach einem der Ansprüche 1 bis 11, ferner umfassend:

- Implementieren mindestens eines Bildanalysealgorithmus auf mindestens einem Top-Down-Bild von mindestens einem benachbarten Bereich, der an den Bereich von Interesse angrenzt, um Umweltdaten zu bestimmen, die für mindestens einen Primärproduzenten und/oder mindestens ein Biotop jedes benachbarten Bereichs repräsentativ sind;
- für jeden benachbarten Bereich, Berechnen (30) eines Kohlenstoffabscheidungsindikators, der für ein geschätztes Kohlenstoffabscheidungspotential des benachbarten Bereichs repräsentativ ist, basierend auf den bestimmten Umweltdaten des benachbarten Bereichs und auf dem berechneten Kohlenstoffabscheidungsindikator des Bereichs von Interesse.

**13.** Computerprogramm, umfassend Anweisungen, die, wenn sie von einem Computer ausgeführt werden, den Computer veranlassen, die Schritte des Verfahrens nach einem der Ansprüche 1 bis 12 auszuführen.

**14.** Fernüberwachungssystem (2) zum Bewerten der Kohlenstofferfassung in einem Bereich von Interesse, wobei das Fernüberwachungssystem (2) eine Verarbeitungseinheit (6) einschließt, die konfiguriert ist zum:

- Implementieren mindestens eines Bildanalysealgorithmus auf mindestens einem Top-Down-Bild mindestens eines Teils des Bereichs von Interesse, um Umweltdaten zu bestimmen, die für mindestens einen Primärproduzenten und/oder mindestens ein Biotop des Bereichs von Interesse repräsentativ sind, wobei der mindestens eine Bildanalysealgorithmus basierend auf jedem Top-Down-Bild das Extrahieren von Farbmerkmalen, die einen normalisierten Differenzvegetationsindex und einen normalisierten Differenzwasserindex umfassen, und das Durchführen mindestens eines von Folgendem:

o Bilderkennung, um vorbestimmte Formen und/oder vorbestimmte Kombinationen von Formen und die extrahierten Farbmerkmale in dem abgerufenen Top-Down-Bild mindestens einem Primärproduzenten und/oder mindestens einem Biotop zuzuordnen; und
o Anwenden eines Modells der künstlichen Intelligenz, um das Top-Down-Bild zu analysieren, wobei das Modell der künstlichen Intelligenz zuvor basierend auf den Farbmerkmalen in bekannten Bereichen, in denen mindestens ein Primärproduzent eindeutig identifiziert wurde, trainiert wurde, um zu lernen, welche Werte der Farbmerkmale mit dem Primärproduzenten verbunden sind;

- basierend auf den bestimmten Umweltdaten, Berechnen eines Kohlenstoffabscheidungsindikators, der für ein geschätztes Kohlenstoffabscheidungspotenzial des Bereichs von Interesse repräsentativ ist.

## Revendications

**1.** Procédé mis en œuvre par ordinateur (20) permettant d'évaluer une capture de carbone dans une zone d'intérêt, le procédé comprenant :

- la mise en œuvre (22) d'au moins un algorithme d'analyse d'image sur au moins une image de haut en bas d'au moins une partie de la zone d'intérêt, afin de déterminer des données environnementales représentant au moins un producteur primaire et/ou au moins un biotope de la zone d'intérêt, ledit au moins un algorithme d'analyse d'image comprenant l'extraction, sur la base de chaque image de haut en bas, de caractéristiques de couleur comprenant un indice de végétation par différence normalisée et un indice d'eau par différence normalisée, et la réalisation d'au moins l'une parmi :

◦ la reconnaissance d'image pour associer des formes prédéterminées et/ou des combinaisons prédéterminées de formes et les caractéristiques de couleur extraites dans l'image de haut en bas récupérée à au moins un producteur primaire et/ou à au moins un biotope ; et
◦ l'application d'un modèle d'intelligence artificielle pour analyser l'image de haut en bas, ledit modèle d'intelligence artificielle ayant été préalablement entraîné sur la base desdites caractéristiques de couleur dans des zones connues où au moins un producteur primaire a été clairement identifié, afin d'apprendre quelles valeurs de caractéristiques de couleur sont associées audit producteur primaire ;

- sur la base des données environnementales déterminées, le calcul (24) d'un indicateur de capture de carbone représentant un potentiel de capture de carbone estimé de la zone d'intérêt.

**2.** Procédé (20) selon la revendication 1, dans lequel l'indicateur de capture de carbone calculé est une productivité primaire nette de la zone d'intérêt.

**3.** Procédé (20) selon la revendication 2, comprenant en outre le calcul du potentiel de capture de carbone de la zone d'intérêt sur la base de la productivité primaire nette et d'une taille de la zone d'intérêt.

**4.** Procédé (20) selon l'une quelconque des revendications 1 à 3, dans lequel les données environnementales déterminées comportent au moins un producteur primaire de la zone d'intérêt, et dans lequel le calcul de l'indicateur de capture de carbone comporte l'association de chaque producteur primaire à une productivité primaire nette attendue correspondante.

**5.** Procédé (20) selon l'une quelconque des revendications 1 à 4, dans lequel l'indicateur de capture de carbone est en outre calculé sur la base de données d'habitat associées à la zone d'intérêt et représentant des caractéristiques climatiques, des caractéristiques pédologiques et/ou des caractéristiques de sédiment, des caractéristiques géologiques, des caractéristiques hydrographiques et/ou des caractéristiques topographiques de la zone d'intérêt.

6. Procédé (20) selon l'une quelconque des revendications 1 à 5, dans lequel les données environnementales sont en outre déterminées sur la base d'une série d'images de haut en bas de la zone d'intérêt acquises à différentes dates d'acquisition.

7. Procédé (20) selon l'une quelconque des revendications 1 à 6, comportant en outre la récupération de données de mesure sur site représentant au moins une propriété physique et/ou chimique de la zone d'intérêt, l'indicateur de capture de carbone étant en outre calculé sur la base des données de mesure sur site récupérées.

8. Procédé (20) selon l'une quelconque des revendications 1 à 7, dans lequel l'étape (22) consistant à mettre en œuvre au moins un algorithme d'analyse d'image comporte la détection de la présence d'au moins une structure d'origine humaine prédéterminée dans la zone d'intérêt, l'indicateur de capture de carbone étant en outre calculé sur la base de chaque structure d'origine humaine détectée.

9. Procédé (20) selon l'une quelconque des revendications 1 à 8, comportant en outre la prédiction (26) d'une évolution de l'indicateur de capture de carbone au fil du temps sur la base des données environnementales déterminées.

10. Procédé (20) selon la revendication 9 lorsqu'elle dépend de la revendication 8, dans lequel l'évolution de l'indicateur de capture de carbone au fil du temps est en outre prédite sur la base de chaque structure d'origine humaine détectée.

11. Procédé (20) selon l'une quelconque des revendications 1 à 10, dans lequel au moins l'un parmi les données environnementales déterminées et l'indicateur de capture de carbone calculé est associé à une date d'acquisition de chaque image de haut en bas correspondante, le procédé comportant en outre la surveillance (28) d'une évolution des données environnementales et/ou de l'indicateur de capture de carbone au fil du temps, et la sortie d'un signal d'alerte si une variation correspondante au fil du temps se situe en dehors d'une plage prédéterminée.

12. Procédé (20) selon l'une quelconque des revendications 1 à 11, comprenant en outre :

   - la mise en œuvre d'au moins un algorithme d'analyse d'image sur au moins une image de haut en bas d'au moins une zone voisine à proximité de la zone d'intérêt, afin de déterminer des données environnementales représentant au moins un producteur primaire et/ou au moins un biotope de chaque zone voisine ;
   - pour chaque zone voisine, le calcul (30) d'un indicateur de capture de carbone représentant un potentiel de capture de carbone estimé de ladite zone voisine, sur la base des données environnementales déterminées de ladite zone voisine et de l'indicateur de capture de carbone calculé de la zone d'intérêt.

13. Programme informatique comprenant des instructions, qui lorsqu'elles sont exécutées par un ordinateur, amènent l'ordinateur à effectuer les étapes du procédé selon l'une quelconque des revendications 1 à 12.

14. Système de surveillance à distance (2) permettant d'évaluer une capture de carbone dans une zone d'intérêt, le système de surveillance à distance (2) comportant une unité de traitement (6) configurée pour :

   - mettre en œuvre au moins un algorithme d'analyse d'image sur au moins une image de haut en bas d'au moins une partie de la zone d'intérêt, afin de déterminer des données environnementales représentant au moins un producteur primaire et/ou au moins un biotope de la zone d'intérêt, ledit au moins un algorithme d'analyse d'image comprenant l'extraction, sur la base de chaque image de haut en bas, de caractéristiques de couleur comprenant un indice de végétation par différence normalisée et un indice d'eau par différence normalisée, et la réalisation d'au moins l'une parmi :

      ◦ la reconnaissance d'image pour associer des formes prédéterminées et/ou des combinaisons prédéterminées de formes et les caractéristiques de couleur extraites dans l'image de haut en bas récupérée à au moins un producteur primaire et/ou à au moins un biotope ; et
      ◦ l'application d'un modèle d'intelligence artificielle pour analyser l'image de haut en bas, ledit modèle d'intelligence artificielle ayant été préalablement entraîné sur la base desdites caractéristiques de couleur dans des zones connues où au moins un producteur primaire a été clairement identifié, afin d'apprendre quelles valeurs de caractéristiques de couleur sont associées audit producteur primaire ;

- sur la base des données environnementales déterminées, calculer un indicateur de capture de carbone représentant un potentiel de capture de carbone estimé de la zone d'intérêt.

2

**Figure 1**

20

**Figure 2**

## REFERENCES CITED IN THE DESCRIPTION

**Patent documents cited in the description**

- US 2005273358 A1

**Non-patent literature cited in the description**

- **CORY C CLEVELAND et al.** A comparison of plot-based satellite and Earth system model estimates of tropical forest net primary production. *Global Biochemical Cycles, American Geophysical Union*, vol. 29 (5), 626-644

- Multi-angle narrow-band remote sensing of gross primary production. **FORREST G HALL et al.** IEEE International Geoscience and Remote Sensing Symposium. IEEE, 2016, 1717-1718